# EUROPÄISCHE PATENTSCHRIFT

(11) **EP 1 864 959 B1**
(45) Veröffentlichungstag und Bekanntmachung des Hinweises auf die Patenterteilung: **27.06.2012**
(21) Anmeldenummer: 07005427.5
(22) Anmeldetag: 16.03.2007
(51) Int. Cl.: C04B 35/626, C04B 35/573, C04B 35/80, F16D 65/12, F16D 69/02

(54) **Kohlenstoff-Teilchen mit kugelförmiger Gestalt enthaltende keramische Werkstoffe**
Ceramic materials containing carbon particles of spherical shape
Petites pièces de carbone sphérique comportant des matières premières céramiques

(30) Priorität: 08.06.2006 DE 102006026550
(43) Veröffentlichungstag der Anmeldung: 12.12.2007
(73) Patentinhaber: AUDI AG, 85045 Ingolstadt (DE)
(72) Erfinder: Kienzle, Andreas, 86753 Balgheim (DE); Krätschmer, Ingrid, 86485 Biberach (DE)
(74) Vertreter: Asch, Konrad

(56) Entgegenhaltungen:
- EP-A- 1 457 703
- EP-A2- 0 926 111
- DE-A1- 10 233 729
- DE-A1- 19 962 548
- DE-C1- 19 711 829
- US-A1- 2002 084 558
- KRENKEL ET AL: "C/C-SiC composites for space applications and advanced friction systems" MATERIALS SCIENCE AND ENGINEERING A: STRUCTURAL MATERIALS: PROPERTIES, MICROSTRUCTURE & PROCESSING, LAUSANNE, CH, Bd. 412, Nr. 1-2, 5. Dezember 2005 (2005-12-05), Seiten 177-181, XP005173795 ISSN: 0921-5093

## Beschreibung

Die Erfindung betrifft keramische Werkstoffe, die kugelförmige Kohlenstoff-Teilchen enthalten.

Keramische Werkstoffe zeichnen sich gegenüber Metallen unter anderem durch hohe Härte, sowie thermische Beständigkeit und Beständigkeit gegen Korrosion aus. Die geringere Festigkeit und höhere Bruchempfindlichkeit von keramischen Werkstoffen kann durch in keramischen Verbundwerkstoffen enthaltene Verstärkungsfasern kompensiert werden. Die als disperse Phase in den keramischen Werkstoffen enthaltenen Verstärkungsfasern wirken als Rissverzweigungs- und Rissumlenkungsstellen; dabei können die mechanischen Spannungen auf ein größeres Volumenelement verteilt und unter die (lokale) Bruchfestigkeit erniedrigt werden.

Einerseits bewirken diese Fasern, die bevorzugt aus Kohlenstoff bestehen, bei guter Anbindung an die Matrix des keramischen Werkstoffs eine erhebliche Erhöhung der Steifigkeit (Modul) und Festigkeit des Werkstoffs, andererseits können diese Fasern als Oxydationswege wirken, da Fasern aus Kohlenstoff bei hohen Betriebstemperaturen oxydativ geschädigt werden, und "verbrannte" Fasern Kanäle bilden können, längs derer Sauerstoff ins Innere des Werkstücks gelangen kann und so zu weiterer Schädigung führen kann.

Bremsscheiben aus keramischen Verbundwerkstoffen beispielsweise zeichnen sich gegenüber Bremsscheiben aus Metall unter anderem durch niedrigere Dichte, niedrigeren Verschleiß und höhere Verzögerungsleistung aus.

In der Patentschrift DE 197 11 829 C1 wird ein Verfahren zur Herstellung einer faserverstärkten Verbundkeramik beschrieben, bei dem Faserstoffbündel mit einem pyrolysierbaren Bindemittel imprägniert werden und das Bindemittel verfestigt wird, danach wird eine Mischung aus Faserstoffbündeln, Füllmitteln und Bindemitteln hergestellt, und diese Mischung zur Herstellung eines Grünlings verpresst, der Grünling wird sodann unter Vakuum oder Schutzgas zur Herstellung eines porösen Formkörpers pyrolysiert, und der Formkörper schließlich mit einer Siliciumschmelze infiltriert. Der Mischung zur Herstellung des Grünlings können kohlenstoffhaltige Füllmittel, vorzugsweise Ruß oder Graphit, zugesetzt werden. Aus der Patentanmeldung EP 1457 703 A1 sind faserverstärkte Keramik-Werkstoffe bekannt, die Verstärkungsfasern in Form von Geweben, Langfasern oder Kurzfasern enthalten, und wobei zumindest ein Teil der Verstärkungsfasern mindestens eine Schutzschicht aus Kohlenstoff aufweist, wobei der Kohlenstoff durch Pyrolyse von auf den Verstärkungsfasern abgeschiedenen Harzen oder Pechen oder Borverbindungen oder Phosphorverbindungen oder Kombinationen davon erzeugt wurde. In der Offenlegungsschrift DE 102 33 729 sind faserverstärkte keramische Bremsbeläge beschrieben, mit einer Matrix, die im wesentlichen Siliciumcarbid, Silicium und/oder Kohlenstoff enthält. Dabei können als Additive duktile Metalle, Hartstoffpartikel oder Schmierstoffe zugesetzt werden.

Aus dem Stand der Technik (DE 100 48 012 A1) sind solche Carbon-Keramik-Bremsscheiben bekannt, die einen mehrschichtigen Aufbau aus Tragkörper und Reibschichten haben, und bei denen der Tragkörper mit langen Fasern aus Kohlenstoff (mittlere Länge zwischen 4 mm und 20 mm) verstärkt ist, und die Reibschichten Kurzfasern aus Kohlenstoff (mittlere Länge zwischen 0,5 mm und 8 mm) als Verstärkungsmittel aufweisen. Eine Verstärkung des Werkstoffs durch Fasern aus Kohlenstoff ist für die Funktion der Reibschicht nicht wesentlich; der Gehalt an Fasern wirkt sich aber auf die Ausbildung von Rissstrukturen und auf den thermischen Ausdehnungskoeffizienten aus. Je ähnlicher die Zusammensetzung der Reibschicht der des Tragkörpers ist, desto geringer sind die Probleme bei dem sogenannten "thermal mismatch", also der unterschiedlichen thermischen Ausdehnung in dem Temperaturbereich von Außentemperatur (- 20 °C bis + 40 °C) bis zur Betriebstemperatur. Die Wahl von Kurzfasern als Bestandteile des Werkstoffs der Reibschicht hat bisher bezüglich dieser thermischen Ausdehnung zu den besten Ergebnissen geführt; jedoch mit den oben angesprochenen Problemen bei der oxydativen und thermischen Langzeit-Stabilität.

Es besteht daher die Aufgabe, Fasern aus Kohlenstoff als Verstärkungsmittel für keramische Werkstoffe zumindest teilweise zu ersetzen, um die oxydative und thermische Stabilität dieser Werkstoffe zu verbessern.

Es wurde gefunden, dass Kohlenstoff in Kugelform als disperse Phase in keramischen Werkstoffen eingesetzt werden kann, wobei der Gehalt an Fasern vermindert oder sogar ganz auf Verstärkungsfasern verzichtet werden kann.

Die Erfindung betrifft daher keramische Werkstoffe, deren Matrix mindestens ein Carbid, mindestens ein carbidbildendes Element und Kohlenstoff enthält, und die weiter eine disperse Phase enthalten von Kohlenstoff-Teilchen mit kugelförmiger Gestalt und einem mittleren Durchmesser von 0,8 µm bis 800 µm, bevorzugt von 0,8 µm bis 500 µm, besonders bevorzugt von 0,8 µm bis 400 µm, wobei die kugelförmigen Kohlenstoff-Teilchen durch Carbonisieren von kugelförmigem organischen Material ausgewählt aus Polymerisatperlen und sprühgetrockneten Kunstharzen oder durch Carbonisieren von getrocknetem Sago erhalten werden.

Bevorzugt wird als carbidbildendes Element Silicium oder eine dieses enthaltende Mischung gewählt; die Matrix enthält dann, gegebenenfalls in Mischung mit anderen Carbiden, Siliciumcarbid.

Der Volumenanteil der dispersen Kohlenstoff-Teilchen, bezogen auf das Volumen des keramischen Werkstoffs, beträgt bevorzugt von 5 % bis 73 %, besonders bevorzugt von 10 % bis 65 %, und insbesondere von 15 % bis 60 %.

Ein Teilchen wird als kugelförmig bezeichnet, wenn in den kleinsten dreiachsigen Ellipsoiden, die um das Teilchen umschrieben werden können, sich die Halbachsen dieses Ellipsoids in ihrer Länge um nicht mehr als 20 % unterscheiden, und dasselbe Kriterium für die größten Ellipsoide erfüllt ist, die innerhalb des Teilchens eingeschrieben werden können, die Mittelpunkte der Ellipsoide um nicht mehr als 25 % der Länge der größten Halbachse des umliegenden Ellipsoids voneinander entfernt sind, und sich die Längen der korrespondierenden Halbachsen des inneren und des äußeren Ellipsoids sich um nicht mehr als 25 % der jeweils größeren Länge unterscheiden.

Die kugelförmigen Kohlenstoff-Teilchen können massiv sein, oder zumindest teilweise hohl oder porös, wobei die Hohlräume und die Porosität einen Volumenanteil von bis zu 50 % des Teilchens ausmachen können.

Als günstig hat sich auch erwiesen, kugelförmige Kohlenstoff-Teilchen mit einer bimodalen Größenverteilung einzusetzen, also eine solche Größenverteilung, die eine Fraktion mit großen und eine Fraktion mit kleinen Teilchen enthält, wobei die Größe der kleinen Teilchen so gewählt ist, daß sie in die zwischen den großen Teilchen gebildeten Zwickel passen. Dabei ist es bevorzugt, als große Teilchen solche mit einem mittleren Teilchendurchmesser von 100 µm bis 150 µm einzusetzen.

Die erfindungsgemäßen keramischen Werkstoffe können weiter auch Fasern enthalten, bevorzugt solche aus Kohlenstoff, und ebenfalls bevorzugt mit einem Durchmesser von 4 µm bis 12 µm und bevorzugt einer Länge von 0,1 mm bis 48 mm, bevorzugt von 0,2 mm bis zu 24 mm.

Geeignete kugelförmige Kohlenstoff-Teilchen können durch Carbonisieren von kugelförmigem organischem Material wie Polymerisatperlen, Kunstharzpulvern, die durch Sprühtrocknung gewonnen werden, oder auch biogenem Material wie beispielsweise getrocknetem Sago hergestellt werden. Besonders geeignet sind Perlpolymerisate, insbesondere von vernetztem Polystyrol, die beispielsweise als Ionenaustauscher eingesetzt werden, und die Bausteine von funktionellen Comonomeren mit Säuregruppen oder Ammoniumgruppen enthalten. Über diese funktionellen Gruppen lassen sich diese vernetzten Polymeren mit Kationen oder Anionen beladen, wie Alkali- oder Erdalkalimetall-Kationen, bevorzugt Na, K, Mg, Ca, und Sr, Kationen von Aluminium, Blei, Titan, Zirkon, Hafnium oder seltenen Erdmetallen wie Yttrium oder Gadolinium; als Anionen werden bevorzugt Phosphate, Borate, Aluminate, Titanate und Silicate genannt. Bei geeigneter Kombination können in derartigen Kohlenstoffkügelchen unter den Verfahrensbedingungen der Herstellung der keramischen Werkstoffe Gläser gebildet werden.

Die erfindungsgemäßen keramischen Werkstoffe werden hergestellt, indem im ersten Schritt eine Mischung aus kugelförmigen Kohlenstoff-Teilchen und einem Bindemittel, ausgewählt aus Kunstharzen, Pechen oder Mischungen von diesen, sowie gegebenenfalls Fasern aus Kohlenstoff bereitet wird. Es ist möglich, hierbei die Bindemittel in Pulverform oder in flüssiger oder zähflüssiger Form zu verwenden. Trockenmischungen können in einem Rührwerk, flüssige oder pastöse Mischungen in einem Kneter hergestellt werden. Eine Trockenmischung muß vor oder während der Formgebung entlüftet werden, bei flüssigen oder pastösen Mischungen wird bereits während des Mischens entlüftet. Der durch Verdichten aus dieser Mischung hergestellte Formkörper soll im wesentlichen porenfrei sein, bevorzugt eine Porosität von höchstens 15 % aufweisen, gemessen als Volumenanteil von Poren in dem Formkörper.

In weiteren bevorzugten Ausfuhrungsformen kann der Mischung auch pulverförmiges Silicium zugegeben werden, wobei der Massenanteil von Silicium-Pulver in der Mischung bis zu 15 %, bevorzugt bis zu 10 %, und insbesondere bis zu 8 % betragen kann. Das pulverförmige Silicium hat bevorzugt eine Korngröße (Teilchendurchmesser) im Bereich von 50 µm bis 2 mm.

Das Verdichten zu einem Formkörper kann bevorzugt in einer Presse erfolgen.

Insbesondere erfolgt die Herstellung der keramischen Werkstoffe gemäß Anspruch 8.

Es ist erfindungsgemäß auch möglich, bereits die Vorprodukte der Kohlenstoff-Kügelchen zu einem Vorkörper zu verdichten, im Fall der Polymerisat-Kügelchen beispielsweise durch Erwärmen in die Nähe der Glasübergangstemperatur. Dabei bildet sich eine verdichtete Schüttung mit Zwickeln durch Verbinden sich berührenden Teilchen in der Umgebung der Berührungsstelle.

Es ist erfindungsgemäß weiter möglich, zusätzlich der genannten Mischung aus kugelförmigen Kohlenstoff-Teilchen, gegebenenfalls Fasern aus Kohlenstoff, und einem Bindemittel weiter Pulver aus amorphem Kohlenstoff zuzusetzen, das beispielsweise durch Mahlen von carbonisierten Kunstharzen wie beispielsweise Phenolharzen oder pulverförmigen Pechen erhalten wird.

Die beschriebenen keramischen Werkstoffe lassen sich vorteilhaft zur thermischen Isolierung, als Schutzschicht in keramischen Panzerungen gegen mechanische Einwirkung, oder als Reibschicht in Bremsscheiben oder Kupplungsscheiben verwenden.

Die Erfindung wird durch die nachfolgenden Beispiele beschrieben.

### Beispiel 1 Herstellung von amorphem kugelförmigen Kohlenstoff

2 kg eines Ionenaustauscherharzes auf Basis eines sulfonierten Styrol-Divinylbenzol-Copolymeren (®Lewatit K 1461, Bayer AG), wobei 90 % der Teilchen eine Korngröße von bis zu 620 µm aufweisen, wurden mit einer Aufheizrate von 1 K/min auf eine Temperatur von 900 °C unter einer Stickstoffatmosphäre aufgeheizt. Nach Halten der Temperatur während einer Stunde wurde das verkohlte (carbonisierte) Harz auf Raumtemperatur abgekühlt. Während der Pyrolyse trat ein Massenverlust von 80 % auf, die Teilchen schrumpften dabei auf eine mittlere Teilchengröße von ca. 40 µm bis ca. 50 µm.

### Beispiel 2a Herstellung einer Preßmasse aus Phenolharz und kugelförmigem Kohlenstoff

500 g des kugelförmigen amorphen Kohlenstoffs von Beispiel 1 wurden mit 400 g eines trockenen Phenolharzpulvers (^{®}Bakelite 223) in einem Intensivmischer der Fa. Eirich bei 300 min⁻¹ vorgemischt. Anschließend wurden bei einer erhöhten Drehzahl von 1200 min⁻¹ innerhalb von 5 Minuten 300 ml einer wäßrigen Lösung von Polyvinylalkohol (Massenkonzentration in der Lösung: 5 g in 100 g) zugesetzt. Es bildet sich eine als "Granulat" bezeichnete klumpige Masse. Diese wird in einem Trockenschrank auf eine Restfeuchte von ca. 2,5 % getrocknet (restlicher Massenanteil von Wasser im Granulat).

### Beispiel 2b Herstellung einer Preßmasse aus Phenolharz, Kohlenstoffpulver und kugelförmigem Kohlenstoff

300 g des kugelförmigen amorphen Kohlenstoffs von Beispiel 1 wurden mit 400 g eines trockenen Phenolharzpulvers (^{®}Bakelite 227) und 300 g eines amorphen Kohlenstoffpulvers mit einer mittleren Teilchengröße von 100 µm bis 120 µm, erhalten durch Mahlen und Sieben eines carbonisierten Phenolharzes, in einem Intensivmischer der Fa. Eirich bei 300 min⁻¹ vorgemischt. Anschließend wurden bei einer erhöhten Drehzahl von 1200 min⁻¹ innerhalb von 5 Minuten 250 ml einer wäßrigen Lösung von Polyvinylalkohol (Massenkonzentration in der Lösung: 5 g in 100 g) zugesetzt. Es bildet sich eine als "Granulat" bezeichnete klumpige Masse. Diese wird in einem Trockenschrank auf eine Restfeuchte von ca. 2,5 % getrocknet (restlicher Massenanteil von Wasser im Granulat).

### Beispiel 2c Herstellung einer Preßmasse aus Phenolharz, Kohlenstoffpulver und kugelförmigem Kohlenstoff

240 g des kugelförmigen amorphen Kohlenstoffs von Beispiel 1 wurden mit 400 g eines trockenen Phenolharzpulvers (^{®}Bakelite 227), 120 g Kurzfasern aus Kohlenstoff mit einer mittleren Länge von 0,5 mm bis 1,0 mm, und 240 g eines amorphen Kohlenstoffpulvers mit einer mittleren Teilchengröße von 100 µm bis 120 µm, erhalten durch Mahlen und Sieben eines carbonisierten Phenolharzes, in einem Intensivmischer der Fa. Eirich bei 300 min⁻¹ vorgemischt. Anschließend wurden bei einer erhöhten Drehzahl von 1200 min⁻¹ innerhalb von 5 Minuten 250 ml einer wäßrigen Lösung von Polyvinylalkohol (Massenkonzentration in der Lösung: 5 g in 100 g) zugesetzt. Es bildet sich eine als "Granulat" bezeichnete klumpige Masse. Diese wird in einem Trockenschrank auf eine Restfeuchte von ca. 2,5 % getrocknet (restlicher Massenanteil von Wasser im Granulat).

### Beispiel 3a Herstellung einer zylindrischen Preßplatte

350 g des getrockneten Granulats von Beispiel 2a wurden in eine zylindrische Preßform mit einem Außendurchmesser von 350 mm und einem Durchmesser des inneren Zylinders von 180 mm auf gleiche Höhe eingefüllt, und bei einem Druck von 170 MPa und einer Temperatur von 150 °C zehn Minuten lang gepreßt. Nach dem Aushärten wurde eine 3 mm dicke zylinderringförmige Scheibe mit mit einem Außendurchmesser von 350 mm und einem Innendurchmesser von 180 mm erhalten.

### Beispiel 3b Herstellung einer zylindrischen Preßplatte

Analog zu Beispiel 3a wurden Preßplatten aus den Granulaten der Beispiel 2b und 2c hergestellt, deren Dichten nach dem Pressen 1370 kg/m³ (2b) und 1460 kg/m³ (2c) betrugen. Beim Silicieren dieser Platte alleine, ansonsten gemäß dem Verfahren von Beispiel 5 ergab sich eine Dichte von 2070 kg/m³ (2b) bzw. 2190 kg/m³ (2c).

### Beispiel 4 Herstellung eines Tragkörpers

Gemäß der Beschreibung in der Patentanmeldung DE 197 10 105 A1 wurden beschichtete Graphit-Kurzfasern hergestellt. Mit diesen Fasern wurde eine Preßmasse zubereitet aus 25 kg einer Fraktion der genannten Fasern mit einem Längenbereich von 1 mm bis 2 mm, 6 kg einer Fraktion der genannten Fasern mit einem Längenbereich von bis zu 0,5 mm, und 4 kg einer Faserfraktion mit einem Längenbereich von 0,5 mm bis 1 mm, und 10 kg eines Phenolharzes (^{®}Norsophen 1203), wobei diese Mischung in einem Intensivmischer der Firma Eirich acht Minuten bei einer Drehzahl von 500 min⁻¹ homogenisiert wurde. 3,2 kg der so hergestellten Preßmasse wurden in eine Form in Gestalt eines Zylinderrings mit einem Außendurchmesser von 360 mm und einem Innendurchmesser von 160 mm gefüllt. Kunststoffkerne mit der Form der gewünschten Kühlkanäle wurden beim Befüllen in die Form eingelegt. In einer Warmfließpresse bei einem Druck von 2,5 N/mm² und einer Temperatur von bis zu 180 °C wurde die Masse zu einem Grünling gehärtet, der anschließend bei ca. 900 °C unter Ausschluß von oxydierenden Agenzien carbonisiert wurde unter Bildung eines porösen faserverstärkten Kohlenstoff-Körpers. Der Körper erlitt einen Massenverlust von 12,5 %, bezogen auf die Einsatzmasse. Der Körper wurde auf die gewählte Endgeometrie bearbeitet.

### Beispiel 5 Herstellungeiner Verbundscheibe aus einem carbonisierten Tragkörper und zwei zylindrischen Preßplatten gemäß Beispiel 3

Zwei Preßplatten gemäß Beispiel 3 wurden in einem Ofen bei einer Heizrate von 2 K/min unter Schutzgas (Argon) auf eine Temperatur von 900 °C erhitzt, wobei die gehärteten Phenolharzanteile zu amorphem Kohlenstoff umgewandelt wurden. Diese Scheiben wurden nach Abkühlen und Entnahme aus dem Ofen auf jeweils eine Deckfläche eines zylinderringförmigen Tragkörpers gemäß Beispiel 4 mit einem Phenolharzkleber fixiert. Durch Härten in einer Presse bei 140 °C und einem Druck von 100 MPa wurde eine Verbundscheibe mit einer Masse von ca. 2200 g hergestellt. Die Scheibe wurde in einen Graphittiegel auf drei poröse Kohlenstoff-Dochte aufgelegt, der Tiegel wurde mit 2800 g Silicium-Granulat (Körnung 0 mm bis 2 mm) befüllt und in einem Vakuumofen unter vermindertem Druck (ca. 5 mbar) auf eine Temperatur von ca. 1700 °C erhitzt. Die Aufheizraten betrugen 5 K/min bis zu 1420 °C, und 2 K/min bis zu 1700 °C; das Silicium schmilzt ab 1420 °C und dringt über die Porenkanäle in den Verbundkörper ein, wo es mit Kohlenstoff zu SiC reagiert. Nach dem Abkühlen wird das gebildete C/SiC-Bauteil entnommen und gegebenenfalls an den Funktionsflächen überschliffen.

## Patentansprüche

1. Keramische Werkstoffe, deren Matrix mindestens ein Carbid, mindestens ein carbidbildendes Element und Kohlenstoff enthält, und die weiter eine disperse Phase enthalten von Kohlenstoff-Teilchen mit kugelförmiger Gestalt und einem mittleren Durchmesser von 0,8 µm bis 800 µm, wobei die kugelfömigen Kohlenstoff-Teilchen durch Carbonisieren von kugelförmigem organischen Material ausgewählt aus Polymerisatperlen und sprühgetrockneten Kunstharzen oder durch Carbonisieren von getrocknetem Sago erhalten werden.

2. Keramische Werkstoffe nach Anspruch 1, **dadurch gekennzeichnet, dass** die Matrix Silicium als carbidbildendes Element und Siliciumcarbid als Carbid enthält.

3. Keramische Werkstoffe nach Anspruch 1, **dadurch gekennzeichnet, dass** sie zusätzlich eine disperse Phase von Fasern aus Kohlenstoff mit einem Durchmesser von 4 µm bis 12 µm und einer Länge von 0,1 mm bis 48 mm enthalten.

4. Keramische Werkstoffe nach Anspruch 1, **dadurch gekennzeichnet, dass** der Volumenanteil der dispersen Kohlenstoff-Teilchen von 5 % bis 73 % des Volumens der keramischen Werkstoffe beträgt.

5. Keramische Werkstoffe nach Anspruch 1, **dadurch gekennzeichnet, dass** die Kohlenstoff-Teilchen durch Carbonisieren von durch Perlpolymerisation herstellbaren Polymerisaten erhältlich sind.

6. Keramische Werkstoffe nach Anspruch 1, **dadurch gekennzeichnet, dass** die Kohlenstoff-Teilchen durch Carbonisieren von lonenaustauscher-Materialien in Kugelform erhältlich sind.

7. Keramische Werkstoffe nach Anspruch 6, **dadurch gekennzeichnet, dass** die Ionenaustauscher-Materialien mit Kationen ausgewählt aus den Kationen von Natrium, Kalium, Magnesium, Calcium, Strontium, Aluminium, Blei, Titan, Zirkon und Hafnium, oder mit Anionen ausgewählt aus Boraten, Aluminaten, Silicaten, Titanaten und Phosphaten beladen sind.

8. Verfahren zur Herstellung von keramischen Werkstoffen gemäß Anspruch 1, **dadurch gekennzeichnet, dass** im ersten Schritt eine Mischung enthaltend Kohlenstoff-Teilchen mit kugelförmiger Gestalt und einem mittleren Durchmesser von 0,8 µm bis 800 µm, und ein Bindemittel ausgewählt aus Kunstharzen und Pechen sowie gegebenenfalls Fasern aus Kohlenstoff mit einem Durchmesser von 4 µm bis 12 µm und einer Länge von 0,1 mm bis 48 mm, zu einem im wesentlichen porenfreien Körper verdichtet wird, dieser Körper im zweiten Schritt durch Erhitzen auf eine Temperatur von 750 °C bis 1300 °C zu einem porösen Kohlenstoff-Körper carbonisiert wird, und der poröse Kohlenstoff-Körper im dritten Schritt mit einem carbidbildenden Element oder einer Mischung mehrerer carbidbildender Elemente bei einer Temperatur im Bereich von der Schmelztemperatur des carbidbildenden Elements oder der Mischung dieser mehreren carbidbildenden Elemente bis zu einer Temperatur von 500 K über der genannten Schmelztemperatur umgesetzt wird, wobei zumindest 10 % der Masse des Kohlenstoffs in dem Kohlenstoff-Körper zu Carbid reagiert werden.

9. Verfahren nach Anspruch 8, **dadurch gekennzeichnet, dass** die Mischung des ersten Schritts zusätzlich Silicium-Pulver mit einer Korngröße von 0,05 mm bis 2 mm enthält.

10. Verfahren nach Anspruch 8 oder 9, **dadurch gekennzeichnet, dass** Silicium als ein carbidbildendes Element eingesetzt wird.

11. Verwendung der keramischen Werkstoffe gemäß Anspruch 1 zur thermischen Isolierung, als Schutzschicht in keramischen Panzerungen gegen mechanische Einwirkung, oder als Reibschicht in Bremsscheiben oder Kupplungsscheiben.

## Claims

1. Ceramic materials, the matrix of which contains at least one carbide, at least one carbide-forming element and carbon, and which further contain a dispersed phase of carbon particles having a spherical shape and an average diameter of from 0.8 µm to 800 µm, wherein the spherical carbon particles are obtained by carbonising spherical organic material, selected from among polymers beads and spray-dried artificial resins, or by carbonising dried sago.

2. Ceramic materials according to claim 1, **characterised in that** the matrix contains silicon as a carbide-forming element and silicon carbide as a carbide.

3. Ceramic materials according to claim 1, **characterised in that** they additionally contain a dispersed phase of carbon fibres having a diameter of from 4 µm to 12 µm and a length of from 0.1 mm to 48 mm.

4. Ceramic materials according to claim 1, **characterised in that** the volumetric proportion of the dispersed carbon particles is from 5 % to 73 % of the volume of the ceramic materials.

5. Ceramic materials according to claim 1, **characterised in that** the carbon particles can been obtained by carbonising polymers which can be prepared by bead polymerisation.

6. Ceramic materials according to claim 1, **characterised in that** the carbon particles can been obtained by carbonising ion-exchanger materials in spherical form.

7. Ceramic materials according to claim 6, **characterised in that** the ion exchanger materials are charged with cations selected from among the cations of sodium, potassium, magnesium, calcium, strontium, aluminium, lead, titanium, zirconium and hafnium, or with anions selected from among borates, aluminates, silicates, titanates, and phosphates.

8. Process for preparing ceramic materials according to claim 1, **characterised in that** in the first step a mixture containing carbon particles having a spherical shape and an average diameter of from 0.8 pm to 800 µm, and a binding agent selected from among artificial resins and pitches, and optionally carbon fibres having a diameter of from 4 µm to 12 µm and a length of from 0.1 I mm to 48 mm, is compacted to form a substantially pore-free body, this body is carbonised in the second step to form a porous carbon body by heating to a temperature of from 750 °C to 1300 °C, and the porous carbon body is reacted in the third step with a carbide-forming element or a mixture of a plurality of carbide-forming elements at a temperature in the range from the melting point of the carbide-forming element or of the mixture of this plurality of carbide-forming elements up to a temperature of 500 K above said melting point, at least 10% of the mass of the carbon in the carbon body being reacted to form carbide.

9. Process according to claim 8, **characterised in that** the mixture in the first step additionally contains silicon powder having a grain size of from 0.05 mm to 2 mm.

10. Process according to either claim 8 or claim 9, **characterised in that** silicon is used as a carbide-forming element.

11. Use of the ceramic materials according to claim 1 for thermal insulation, as a protective layer in ceramic armouring against mechanical action, or as a friction layer in brake discs or clutch discs.

## Revendications

1. Matériaux céramiques, dont la matrice contient au moins un carbure, au moins un élément formant un carbure et du carbone et qui contiennent en outre une phase dispersée de particules de carbone avec une forme sphérique et un diamètre moyen de 0,8 µm à 800 µm, dans lesquels les particules de carbone sphériques sont obtenues par carbonisation d'un matériau organique sphérique choisi dans le groupe constitué de perles de polymère et de résines synthétiques séchées par pulvérisation ou par carbonisation de sagou séché.

2. Matériaux céramiques selon la revendication 1, **caractérisés en ce que** la matrice contient du silicium comme élément formant un carbure et du carbure de silicium comme carbure.

3. Matériaux céramiques selon la revendication 1, **caractérisés en ce qu'**ils contiennent en outre une phase dispersée de fibres de carbone ayant un diamètre de 4 µm à 12 µm et une longueur de 0,1 mm à 48 mm.

4. Matériaux céramiques selon la revendication 1, **caractérisés en ce** la proportion volumique des particules de carbone dispersées est de 5 % à 73 % du volume des matériaux céramiques.

5. Matériaux céramiques selon la revendication 1, **caractérisés en ce que** les particules de carbone peuvent être obtenues par carbonisation de polymères pouvant être produits par polymérisation à l'état de perles.

6. Matériaux céramiques selon la revendication 1, **caractérisés en ce que** les particules de carbone peuvent être obtenues sous la forme de sphères par carbonisation de matériaux échangeurs d'ions.

7. Matériaux céramiques selon la revendication 6, **caractérisés en ce que** les matériaux échangeurs d'ions sont chargés avec des cations choisis dans le groupe constitué des cations de sodium, de potassium, de magnésium, de calcium, de strontium, d'aluminium, de plomb, de titane, de zirconium et de hafnium ou avec des anions choisis dans le groupe constitué de borates, des aluminates, des silicates, des titanates et des phosphates.

8. Procédé de production de matériaux céramiques selon la revendication 1, **caractérisé en ce que** dans la première étape, on compacte un mélange contenant des particules de carbone ayant une forme sphérique et un diamètre moyen de 0,8 µm à 800 µm et un liant, choisi parmi des résines synthétiques et des brais, ainsi qu'éventuellement des fibres de carbone ayant un diamètre de 4 µm à 12 µm et une longueur de 0,1 mm à 48 mm, pour donner un corps sensiblement exempt de pores, on carbonise ce corps lors de la deuxième étape par chauffage à une température de 750 °C à 1300 °C pour former un corps de carbone poreux et on fait réagir le corps de carbone poreux lors de la troisième étape avec un élément formant un carbure ou un mélange de plusieurs éléments formant des carbures à une température située dans la plage de la température de fusion de l'élément formant un carbure ou du mélange de ces plusieurs éléments formant des carbures jusqu'à une température de 500 K supérieure à la température de fusion citée, dans lequel au moins 10 % de la masse du carbone dans le corps de carbone réagit pour former un carbure.

9. Procédé selon la revendication 8, **caractérisé en ce que** le mélange de la première étape contient en outre une poudre de silicium ayant une taille granulaire de 0,05 mm à 2 mm.

10. Procédé selon la revendication 8 ou 9, **caractérisé en ce que** l'on utilise le silicium comme élément formant un carbure.

11. Utilisation des matériaux céramiques selon la revendication 1, pour l'isolation thermique, comme couche de protection dans des blindages céramiques contre une action mécanique ou comme couche de friction dans des disques de frein ou des disques d'embrayage.
